Europäisches Patentamt

European Patent Office

Office européen des brevets

(11) Veröffentlichungsnummer: **0 308 395 B1**

# (12) EUROPÄISCHE PATENTSCHRIFT

(45) Veröffentlichungstag der Patentschrift: **04.03.92**

(21) Anmeldenummer: **85903973.7**

(22) Anmeldetag: **31.07.85**

(86) Internationale Anmeldenummer:
**PCT/AT85/00021**

(87) Internationale Veröffentlichungsnummer:
**WO 87/00989 (12.02.87 87/04)**

(51) Int. Cl.⁵: **H02K 49/04**, H02K 5/26

(54) **WIRBELSTROMBREMSE FÜR KRAFTFAHRZEUGE.**

(43) Veröffentlichungstag der Anmeldung:
**29.03.89 Patentblatt 89/13**

(45) Bekanntmachung des Hinweises auf die
Patenterteilung:
**04.03.92 Patentblatt 92/10**

(84) Benannte Vertragsstaaten:
**AT BE CH DE FR GB IT LI LU NL SE**

(56) Entgegenhaltungen:
**BE-A- 508 801**
**FR-A- 2 152 360**
**US-A- 2 456 039**

**See also references of WO8700989**

(73) Patentinhaber: **Berger, Johann**
**Innsbrucker Strasse 43**
**A-6300 Wörgl(AT)**

(72) Erfinder: **SEIWALD, Andreas**
**Anichstrasse 5**
**A-6300 Wörgl(AT)**

(74) Vertreter: **Torggler, Paul, Dr. et al**
**Wilhelm-Greil-Strasse 16**
**A-6020 Innsbruck(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Wirbelstrombremse für Kraftfahrzeuge zum Einbau in die Antriebswelle, mit einem Gehäuse als Träger peripher angeordneter Magnetspulen, mit einer in einer Gehäusenabe gelagerten und mit der Antriebswelle kuppelbaren Bremswelle, und mit einem auf der Bremswelle befestigten Rotor, wobei am Gehäuse an gegenüberliegenden Seiten Gewindebohrungen aufweisende Montageplatten für die Verbindung mit Längsträgern des Fahrgestells vorgesehen sind.

Eine derartige Wirbelstrombremse ist beispielsweise der DE-C-955 969 zu entnehmen. Insbesondere für Schwerfahr-Zeuge stelle eine Wirbelstrombremse eine wirkungsvolle, unabhängige Ergänzung des übrigen Bremssystems dar, und wird, angebaut an das Schaltgetriebe oder als Teil der Kardanwelle, in den Antrieb eingesetzt. Werden die Magnetspulen erregt, so bauen sie Magnetfelder auf, die in dem sich drehenden Rotor Wirbelströme induzieren. Die wiederum von den Wirbelströmen aufgebauten Magnetfelder wirken mit denen der Magnetspulen zusammen und bremsen den Rotor und damit die Antriebswelle. Für den Einbau in die Kardanwelle ist die Befestigung des Bremsgehäuses an Längsträgern des Fahrzeugrahmens üblich. Da aber auch die axiale Übereinstimmung der Bremswelle mit der Kardanwelle erforderlich ist, die bei den verschiedenen Fahrzeugtypen mit unterschiedlichen Höhenabständen und Winkeln zu den Längsträgern verläuft, ist es bisher notwendig, auf den jeweiligen Fahrzeugtyp abgestimmte Montageelemente vorzusehen.

Die FR-A- 2 152 360 zeigt eine Wirbelstrombremse, die zur Verbindung mit einer Antriebswelle einen Kupplungsflansch mit zumindest zwei Kränzen unterschiedlicher Bohrungen aufweist, sodaß eine Montage an zumindest zwei mit verschiedenen Bohrungsanordnungen versehenen Kupplungsflanschen der Antriebswelle möglich ist.

Aus der BE-A-508 801 ist es bekannt, für eine schwingende Befestigung von Motoren Seitenarme einer Trägerschaukel des Motors mit einer ersten Anzahl von Löchern und Seitenarme eines Gestells mit Löchern in anderer Anordnung und anderer Größe zu versehen, in denen Kugellager mittels zweier an den Seitenarmen des Gestells befestigbarer Platten eingesetzt werden können.

Die Kugellager nehmen Schrauben auf, die die Seitenarme der Trägerschaukel schwenkbar an den Seitenarmen des Gestells lagern. Da die Seitenarme der Trägerschaukel gegenüber der Montageplatte der Trägerschaukel ebenfalls noch verschwenkbar angeordnet ist, ist eine beliebige Befestigungslage des Motors wählbar.

Schließlich zeigt auch noch die US-A- 2 456 039 eine einstellbare Motorbefestigung auf einer Grundplatte, wobei an dieser vier, mit Kränzen von Bohrungen versehene Scheiben mit je einem Langloch exzentrisch montiert sind, und die Befestigungsschrauben des Motors in den Langlöchern angeordnet werden.

Die Erfindung hat es sich daher zur Aufgabe gestellt, bei einer Wirbelstrombremse der eingangs genannten Art die Fahrzeugmontage mit einer einzigen Garnitur von Montageelementen unabhängig vom Fahrzeugtyp zu ermöglichen.

Dies wird erfindungsgemäß dadurch erreicht, daß pro Montageplatte eine an den Längsträgern des Fahrgestells befestigbare Tragkonsole vorgesehen ist, die in einer ersten geometrischen Konfiguration angeordnete Montageöffnungen aufweist, daß jede Montageplatte eine von den Montageöffnungen unterschiedliche Anzahl von in einer zweiten geometrischen Konfiguration angeordneten Gewindebohrungen aufweist, wobei die Montageöffnungen einen gegenüber den Gewindebohrungen vergrößerten Durchmesser aufweisen und außenseitig ausgeweitet sind, und daß in jede Ausweitung eine Scheibe mit einem Langloch drehbar eingesetzt ist, dessen Breite dem Durchmesser der Gewindebohrungen entspricht, wobei eine Gruppe von Montageöffnunen wahlweise mit einer Gruppe entsprechender Gewindebohrungen in Deckung bringbar ist.

Dadurch kann die Lage der Tragkonsolen einerseits parallel zu den Längsträgern ausgerichtet, und andererseits auf die Einbaulage der Wirbelstrombremse abgestimmt werden, da eine für die stabile Verbindung erforderliche Anzahl von einander deckenden Montageöffnungen und Gewindebohrungen in jeder Einbaulage zur Verfügung steht. Durch den vergrößerten Durchmesser kann die Zahl der Montageöffnungen gering gehalten werden. Vorzugsweise beträgt dieser das Vier- bis Fünffache des Durchmessers der Gewindebohrungen und die Länge des Langlochs in der Scheibe entspricht dem dreifachen Durchmesser der Gewindebohrungen. So ergibt sich eine stufenlos höhen- und winkelverstellbare Befestigung der Tragkonsole an der Montageplatte. Daher kann in einer weiteren Ausführung vorgesehen sein, daß die Gewindebohrungen in zumindest zwei, in Längsrichtung der Montageplatte sich erstreckenden, zueinander parallelen Reihen, und die Montageöffnungen in einer quadratischen oder rechteckigen Konfiguration ausgebildet sind. Hiebei entspricht der Abstand zwischen zwei Gewindebohrungen vorzugsweise dem Durchmesser einer Gewindebohrung.

Eine Montageerleichterung wird weiters dadurch erreicht, daß zwischen je zwei Reihen von Gewindebohrungen in der Montageplatte eine mittlere Reihe von Gewindebohrungen vorgesehen ist, denen ein sich in Richtung der Reihe erstreckendes Langloch der Tragkonsole zugeordnet ist. Die Tragkonsole kann dadurch mittels einer einzigen Befestigungsschraube, die durch das Langloch geführt wird, in einer vorläufigen Montageposition an der Montageplatte festgelegt und beim Einbau in die endgültige Montageposition verschoben und verdreht werden. Nach Einsetzen der Schrauben in die Montageöffnungen werden diese dann solange verdreht, bis deren Langlöcher jeweils mit einer Gewindebohrung fluchten, sodaß die weiteren Befestigungsschrauben gesetzt werden können.

Die Länge jeder Tragkonsole liegt vorzugsweise über der axialen Erstreckung der Wirbelstrombremse, sodaß die Endabschnitte der Tragkonsole, an denen bevorzugt die Verbindung mit den Längsträgern erfolgt, rückspringend ausgebildet sein können. Dies ermöglicht einen Minimalabstand der Wirbelstrombremse zu den Längsträgern, d.h.einen größtmöglichen Durchmesser der Wirbelstrombremse, deren Freiräume für die zur Wärmeabfuhr notwendige Luftumwälzung dadurch größtmöglich dimensioniert sind.

Um auch zwischen der Tragkonsole und den Längsträgern eine Lageranpassung zu erzielen, ist in einer weiteren Ausführung vorgesehen, daß jede Tragkonsole zumindest in den beiden Endabschnitten einen T-förmigen Querschnitt aufweist, und daß jeweils ein quer zur Längsrichtung sich erstreckendes Langloch ausgebildet ist, durch das in der Einbaulage ein Befestigungselement vertikal geführt ist. Vorzugsweise wird aus Stabilitätsgründen die Tragkonsole in der gesamten Länge einen T-förmigen Querschnitt aufweisen,wobei der in der Einbaulage horizontale Mittelsteg der T-Form zusätzlich gewellt oder in anderer Weise alternierend aus der Mittelebene abgewinkelt sein kann.

Weisen die Längsträger des Fahrzeugrahmens einen C-förmigen zueinander offenen Querschnitt auf, so kann die Fixierung der Tragkonsolen weiter vereinfacht werden, wenn das Befestigungselement zwei Klemmplatten durchsetzt, die einen Horizontalflansch des Längsträgers klemmen.

Nachstehend wird nun die Erfindung anhand der Figuren der beiliegenden Zeichnungen näher beschrieben, ohne darauf beschränkt zu sein.

Es zeigen:

Fig.1 eine Ansicht einer zwischen Längsträgern montierten Wirbelstrombremse,

Fig.2 eine Draufsicht auf die montierte Wirbelstrombremse, wobei jeweils die Fixierung der Tragkonsolen an den Längsträgern in zwei verschiedenen Ausführungen gezeigt ist,

Fig.3 eine vergrößerte Seitenansicht einer Tragkonsole in einer mittleren Montagestellung an der nur angedeuteten Wirbelstrombremse,

Fig.4 einen Schnitt nach der Linie IV-IV der Fig.3,

Fig.5 einen Schnitt nach der Linie V-V der Fig.4,

Fig.6 eine vergrößerte Montagescheibe, und

Fig.7 und 8 zwei weitere Einbaustellungen entsprechend Fig.3, in denen die Wirbelstrombremse zu den Längsträgern geneigt ist.

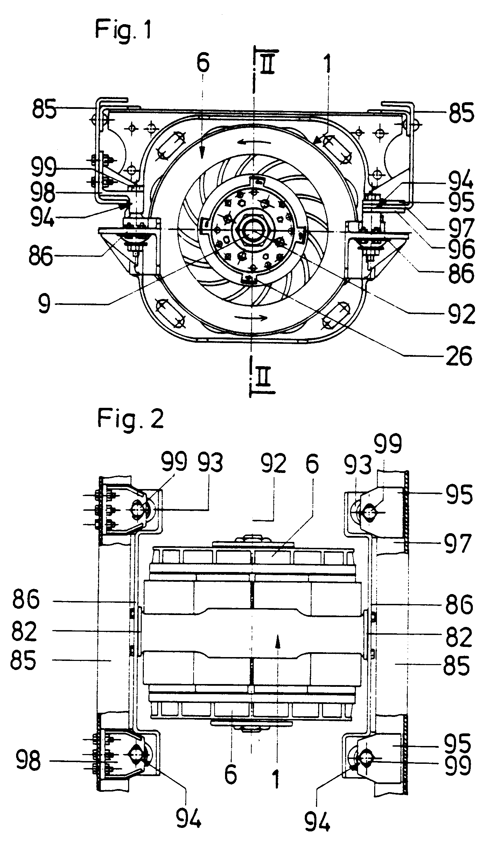

Eine Wirbelstrombremse weist gemäß Fig.1 und 2 ein mittleres, einen Träger der von einer Schutzhaube überdeckten Magnetspulen bildendes Gehäuse 1 auf. Die Magnetspulen sind dabei in zwei Kränzen beidseitig des Gehäuses 1 an dieses durchsetzenden Kernen angeordnet. Das Gehäuse 1 bildet im Bereich der Achse 92 eine Nabe, in der die abzubremsende Welle 9 gelagert ist. Auf der Welle 9 ist beidseitig je eine Rotorscheibe 6 verdrehfest montiert, in denen die Wirbelströme bei Erregung der Magnetspulen induziert werden. Jede Rotorscheibe 6 ist auf einer Rotornabe befestigt, die mit einem Kupplungsflansch zur Verbindung mit den anschließenden Teilen der Antriebswelle bzw. Kardanwelle vorgesehen ist. Jede Rotorscheibe 6 besteht bevorzugt aus zwei Teilen, nämlich spulenseitig aus einem Ring aus magnetisch weichem Material, wie Reineisen, mit guter elektrischer Leitfähigkeit, hoher Permeabilität und geringer Remanenz und einem den Ring tragenden Lüfterrad, dessen Lamellen in den Fig.1 und 2 sichtbar sind, und das zur Luftumwälzung durch die Wirbelstrombremse dient, um die entstehende Wärme abzuführen.

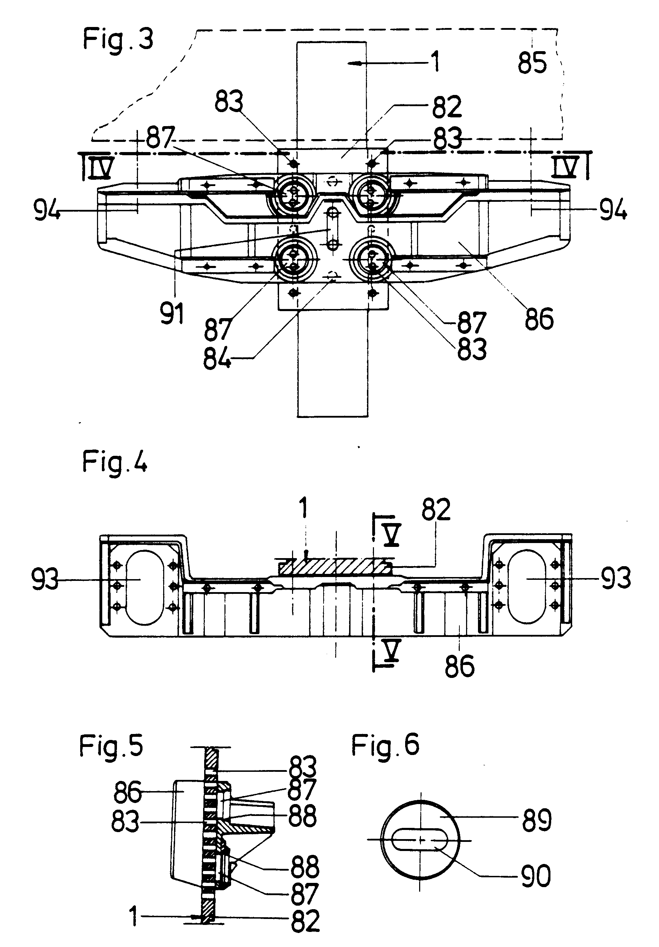

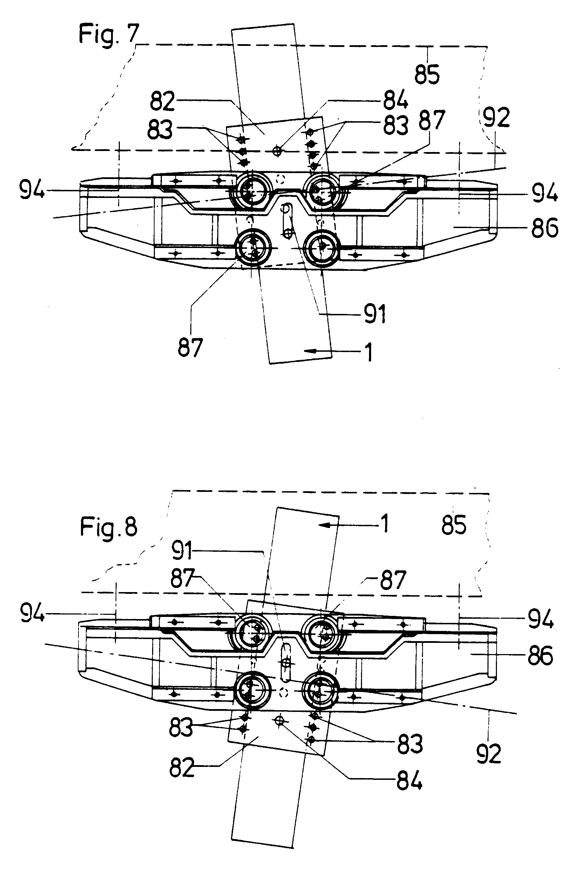

Das Gehäuse 1 der Wirbelstrombremse ist an gegenüberliegenden Seiten mit je einer Montageplatte 82 versehen, über die sie an den Längsträgern 85 des Fahrzeuges befestigbar ist. Die Antriebs- bzw. Kardanwelle des Fahrzeuges verläuft nun je nach Fahrzeugtyp in unterschiedlichem Höhenabstand und unterschiedlichem Winkel geneigt zu den beiden zueinander parallelen Längsträgern 85 des Fahrzeuges. Beispiele dafür zeigen die Fig.3,7 und 8. Um nun unabhängig von der Lage der Kardanwelle die Befestigung der Wirbelstrombremse mittels einer einheitlichen Montage mit gleichen Elementen zu ermöglichen, ist nun pro Montageplatte 82 eine Tragkonsole 86 vorgesehen, die parallel zu Längsträgern 85 an der Montageplatte 82 befestigt wird. Diese weist eine Anzahl von Gewindebohrungen 83 auf, die im Ausführungsbeispiel in zwei zueinander parallelen Reihen angeordnet sind, die in Längsrichtung der Montageplatte 82 und damit etwa in Umfangsrichtung der Wirbelstrombremse verlaufen. Zwischen je zwei Gewindebohrungen 83 ist ein Abstand in der Größe einer Gewindebohrung 83 vorgesehen.

Die Tragkonsole 86 weist ihrerseits Montageöffnungen 87 auf, deren Durchmesser ein Mehrfaches des Durchmessers der Gewindebohrung 83 beträgt, beispielsweise des Vier- bzw. Fünffachen. Die Anordnung der Montageöffnungen 87 entspricht dabei einer geometrischen Konfiguration, vorzugsweise einem Rechteck oder Quadrat, die mit einer dieser Konfiguration entsprechenden Gruppe von Gewindebohrungen 83 der Montageplatte in Deckung bringbar ist (Fig.3,7,8), wobei auf Grund des vergrößerten Durchmessers Schrägneigungen auch in den maximal möglichen Winkeln der Achse 92 zu den Längsträgern einstellbar sind.

Wie aus Fig.5 ersichtlich, weist jede Montageöffnung 87 außenseitig eine Ausweitung 88 auf. In diese ist eine Scheibe 89 einlegbar (Fig.6), die mit einem Langloch 90 versehen ist. Das Langloch 90 weist eine dem Durchmesser der Gewindebohrungen 83 der Montageplatte 82 entsprechende Breite und eine Länge auf, die beispielsweise dem vier- oder fünffachen Durchmesser der Gewindebohrung 83 entspricht. Die Scheibe 89 kann bei der Montage nun in der Ausweitung 88 so lange verdreht werden, bis das Langloch mit einer Gewindebohrung 83 fluchtet. Wie die Fig.3,7 und 8 zeigen, ist pro Montageöffnung 87 zumindest eine derartige Überdeckung gegeben. Der Abstand des Langlochs 90 vom Rand der Scheibe 89 beträgt dabei etwa dem Ausmaß der Ausweitung 88, sodaß die lichte Weite der Montageöffnung vollständig genützt werden kann.

Zusätzlich ist die Tragkonsole mit einem mittleren querverlaufenden Langloch 91 versehen, und in der Montageplatte 82 eine weitere Reihe von Gewindebohrungen 84 ausgebildet, die mittig zwischen den Reihen der Gewindebohrungen 83 verläuft. Die Länge des Langlochs 91 entspricht dabei zumindest dem Abstand zwischen zwei Gewindebohrungen 84 zuzüglich deren doppeltem Durchmesser.

Bei der Montage der Tragkonsole 86 kann nun eine mittlere Schraube durch das Langloch 91 in der ungefähren Höhe in eine Gewindebohrung 84 eingesetzt und anschließend die Tragkonsole 86 in der Höhe verschoben und in die gewünschte Stellung verdreht werden, worauf die übrigen Befestigungsschrauben durch die Scheiben 89 in die Gewindebohrungen 83 eingesetzt werden.

In Fig.1 und 2 sind für die Verbindung zwischen der Tragkonsole 86 und dem Längsträger 85 zwei verschiedene Befestigungsmöglichkeiten 94 dargestellt. Die linke Seite zeigt eine etwa Z-förmige Lasche 98, die an einem vertikalen Steg des Langsträgers 85 befestigt wird, und mittels einer Schraube 99 ein Ende der Tragkonsole 86 hält. Die rechte Seite zeigt eine Befestigungsmöglichkeit 94 mittels Klemmplatten 95, 96, die einen horizontalen Steg 97 des Längsträgers 85 klemmen. Auch hier erfolgt die Verbindung mit der Tragekonsole 86 über eine Schraube 99. Die Tragkonsole 86 ist,wie aus Fig.4 besonders ersichtlich, im Querschnitt im wesentichen T-förmig ausgebildet, wobei zur Versteifung der Tragkonsole 86 der Mittelsteg der T-Form mehrfach abgewinkelt bzw. gewellt verläuft. An den beiden Enden ist die Tragkonsole 86 rückspringend ausgebildet und der Mittelsteg weist in diesen Bereichen jeweils einen querverlaufenden Schlitz 93 auf, sodaß für die Befestigung am Längsträger 85 ein Spielraum in der Breite verbleibt. Da die Tragkonsolen 86 länger als die axiale Erstreckung der Wirbelstrombremse sind, sind durch die rückspringenden Endbereiche der Tragkonsolen 86 maximale Durchmesser der Wirbelstrombremse möglich, sodaß sie unmittelbar bis an die Längsträger 85 heranreichen kann.

Im gezeigten Ausführungsbeispiel ist die Tragkonsole 86 mit der Montageöffnung 87 und die Montageplatte 82 mit einer größeren Anzahl von Gewindebohrungen 83 versehen. Es wäre aber auch die umgekehrte Aufteilung denkbar, indem in der Tragkonsole 86 eine größere Anzahl von Montageöffnungen 87 vorgesehen werden, wenn die Montageplatte 82, wie etwa nach dem Stand der Technik nur vier Gewindebohrungen aufweist, sodaß vor allem auch für derartige Wirbelstrombremsen der Einbau in verschiedene Fahrzeugtypen mit ein- und derselben Tragkonsole ermöglicht wird.

## Patentansprüche

1. Wirbelstrombremse für Kraftfahrzeuge zum Einbau in die Antriebswelle, mit einem Gehäuse (1) als Träger peripher angeordneter Magnetspulen, mit einer in einer Gehäusenabe gelagerten und mit der Antriebswelle kuppelbaren Bremswelle (9), und mit einem auf der Bremswelle (9) befestigten Rotor, wobei am Gehäuse (1) an gegenüberliegenden Seiten Gewindeb ohrungen (83) aufweisende Montageplatten (82) für die Verbindung mit Längsträgern (85) des Fahrgestells vorgesehen sind, dadurch gekennzeichnet, daß pro Montageplatte (82) eine an den Längsträgern (85) des Fahrgestells befestigbare Tragkonsole (86) vorgesehen ist, die in einer ersten geometrischen Konfiguration angeordnete Montageöffnungen (87) aufweist, daß jede Montageplatte (82) eine von den Montageöffnungen (87) unterschiedliche Anzahl von in einer zweiten geometrischen Konfiguration angeordneten Gewindebohrungen (83) aufweist, wobei die Montageöffnungen (87) einen gegenüber den Gewindeb ohrungen (83) vergrößerten Durchmesser aufweisen und außenseitig ausgeweitet sind, und daß in jede Ausweitung (88) eine Scheibe (89) mit einem Langloch (90) drehbar eingesetzt ist, dessen Breite dem Durchmesser der Gewindebohrungen (3) entspricht, wobei eine Gruppe von Montageöffnungen (87) wahlweise mit einer Gruppe entsprechender Gewindebohrungen (83) in Deckung bringbar ist.

2. Wirbelstrombremse nach Anspruch 1, dadurch gekennzeichnet, daß die Gewindebohrungen (83) in zumindest zwei, in Längsrichtung der Montageplatte (82) sich erstreckenden, zueinander parallelen Reihen, und die Montageöffnungen (87) in einer quadratischen oder rechteckigen Konfiguration ausgebildet sind.

**3.** Wirbelstrombremse nach Anspruch 2, dadurch gekennzeichnet, daß zwischen je zwei Reihen von Gewindebohrungen (83) in der Montageplatte (82) eine mittlere Reihe von Gewindebohrungen (84) vorgesehen ist, denen ein sich in Richtung der Reihe erstreckendes Langloch (91) der Tragkonsole (86) zugeordnet ist.

**4.** Wirbelstrombremse nach einem der Ansprüche 1 bis 3, dadurch gekennzeichnet, daß jede Tragkonsole (86) zumindest in den beiden Endabschnitten einen T-förmigen Querschnitt aufweist, und daß jeweils ein quer zur Längsrichtung sich erstreckendes Langloch (93) ausgebildet ist, durch das in der Einbaulage ein Befestigungselement (94) vertikal geführt ist.

**5.** Wirbelstrombremse nach Anspruch 4, dadurch gekennzeichnet, daß das Befestigungselement (94) zwei Klemmplatten (95, 96) durchsetzt, die einen Horizontalflansch (97) des Längsträgers (85) klemmen.

## Claims

**1.** An eddy current brake for motor vehicles for incorporation into the drive shaft, comprising a housing (1) as a carrier for peripherally arranged magnet coils, a brake shaft (9) which is mounted in a housing boss and which can be coupled to the drive shaft, and a rotor which is fixed on the brake shaft (9), wherein provided on the housing (1) at oppositely disposed sides are mounting plates (82) having screwthreaded bores (83) for connection to longitudinal bearers (85) of the vehicle chassis, characterised in that provided for each mounting plate (82) is a support bracket (86) which can be fixed to the longitudinal bearers (85) of the vehicle chassis and which has mounting openings (87) arranged in a first geometrical configuration, that each mounting plate (82) has a number, which is different from the mounting openings (87), of screwthreaded bores (83) arranged in a second geometrical configuration, wherein the mounting openings (87) are of a larger diameter than the screwthreaded bores (83) and are enlarged on the outward side, and that rotatably inserted into each enlargement (88) is a disc (89) having a slot (90), the width of which corresponds to the diameter of the screwthreaded bores (3), wherein a group of mounting openings (87) can be brought selectively into alignment with a group of corresponding screwthreaded bores (83).

**2.** An eddy current brake according to claim 1 characterised in that the screwthreaded bores (83) are formed in at least two mutually parallel rows extending in the longitudinal direction of the mounting plate (82) and the mounting openings (87) are provided in a square or rectangular configuration.

**3.** An eddy current brake according to claim 2 characterised in that provided in the mounting plate (82) between each two rows of screwthreaded bores (83) is a middle row of screwthreaded bores (84), with which a slot (91) in the support bracket (86), which slot extends in the direction of the row, is associated.

**4.** An eddy current brake according to one of claims 1 to 3 characterised in that each support bracket (86) is of a T-shaped cross-section at least in the two end portions and that there is a respective slot (93) which extends transversely with respect to the longitudinal direction and by which a fixing element (94) is vertically guided in the position of installation.

**5.** An eddy current brake according to claim 4 characterised in that the fixing element (94) passes through two clamping plates (95, 96) which clamp a horizontal flange (97) of the longitudinal bearer (85).

## Revendications

**1.** Frein à courants de Foucault pour véhicules automobiles, à installer dans l'arbre de transmission, avec un carter (1) comme support de bobines magnétiques disposées en périphérie, avec un arbre de freinage (9) monté dans un moyeu du carter et pouvant être accouplé à l'arbre de transmission, et avec un rotor fixé sur l'arbre de freinage (9), tandis que sont prévues sur le carter (1), sur les côtés opposés, des plaques de montage (82) présentant des alésages taraudés (83) pour la liaison avec des longerons (85) du châssis,
**caractérisé** en ce qu'il est prévu pour chaque plaque de montage (82) une console porteuse (86) pouvant se fixer aux longerons (85) du châssis, laquelle présente des ouvertures de montage (87) disposées dans une première configuration géométrique, en ce que chaque plaque de montage (82) présente des alésages taraudés (83) en nombre différent de celui des ouvertures de montage (87) et disposés selon une deuxième configuration géométrique, tandis que les ouvertures de montage (87) présentent un diamètre agrandi par rapport à celui des alésages taraudés (83) et sont élargies vers l'extérieur, et en ce que dans chaque élargissement (88) est montée rotative une rondelle (89) avec un trou allongé (90) dont la largeur correspond au diamètre des alésages taraudés (83), tandis qu'un groupe d'ouvertures de montage (87) peut être amené au choix en coïncidence avec un groupe d'alésages taraudés (83) correspondants.

2. Frein à courants de Foucault selon la revendication 1, caractérisé en ce que les alésages taraudés (83) sont répartis en au moins deux rangées parallèles s'étendant dans le sens longitudinal de la plaque de montage (82), et en ce que les ouvertures de montage (87) sont réparties en une configuration quadratique ou rectangulaire.

3. Frein à courants de Foucault selon la revendication 2, caractérisé en ce qu'il est prévu chaque fois, entre deux rangées d'alésages taraudés (83) dans la plaque de montage (82), une rangée médiane d'alésages taraudés (84) auxquels est associé un trou allongé (91) de la console porteuse (86), ce trou s'étendant dans le sens de la rangée.

4. Frein à courants de Foucault selon une des revendications 1 à 3, caractérisé en ce que chaque console porteuse (86) présente, tout au moins dans ses deux sections terminales, une section transversale en forme de T, et en ce que chaque fois un trou allongé (93) s'étendant transversalement au sens longitudinal est ménagé, à travers lequel est guidé verticalement un élément de fixation (94) dans la position de montage.

5. Frein à courants de Foucault selon la revendication 4, caractérisé en ce que l'élément de fixation (94) traverse deux plaques de serrage (95, 96) qui enserrent une aile horizontale (97) du longeron (85).

**Fig. 1**

**Fig. 2**

Fig.3

Fig.4

Fig.5

Fig.6

Fig. 7

Fig. 8